# EUROPEAN PATENT APPLICATION

(11) **EP 4 468 441 A1**
(43) Date of publication of application: **27.11.2024**
(21) Application number: 22922672.5
(22) Date of filing: 26.01.2022
(51) Int. Cl.: H01M 10/0567, H01M 10/0569, H01M 10/42, H01M 10/0525, H01M 10/058

(54) **ELECTROCHEMICAL DEVICE AND ELECTRONIC DEVICE**

(71) Applicant: Ningde Amperex Technology Limited, Zhangwan Town, Jiaocheng District Ningde City Fujian 352100 (CN)
(72) Inventor: ZHANG, Lilan, Ningde City, Fujian 352100 (CN); CHEN, Weixiao, Ningde City, Fujian 352100 (CN); TANG, Chao, Ningde City, Fujian 352100 (CN)
(74) Representative: Icosa
(86) International application number: PCT/CN2022/074056
(87) International publication number: WO 2023/141822

(57) **Abstract**

This application provides an electrochemical apparatus including a negative electrode plate and an electrolyte, where the negative electrode plate includes a negative electrode active material, where the negative electrode active material includes a silicon-based material; and the electrolyte includes a first substance, a second substance, and a third substance; where the first substance is selected from a fluorobenzene compound or a fluoroether compound; the second substance is at least one of phosphate, phosphite, carbonate, carboxylate, ether, or sulfone; and the third substance is a lithium salt; and based on mass of the electrolyte, a mass ratio of the second substance to the third substance is Y, where 0.8 ≤ Y ≤ 4. The electronic apparatus includes the electrochemical apparatus. In this application, cycling performance of the electrochemical apparatus can be significantly improved.

## Description

### TECHNICAL FIELD

This application relates to the field of electrochemistry, and in particular, to an electrochemical apparatus and an electronic apparatus.

### BACKGROUND

Silicon element is considered the most likely to replace graphite as the negative electrode active material for lithium-ion batteries due to its high capacity and abundant reserves. However, commercially available lithium-ion batteries still mainly use traditional graphite as the negative electrode. This is because a silicon-based active material continuously swells and shrinks during cycling, which will lead to the rupture of the anode SEI film and the continuous consumption of electrolyte, deteriorating the cycling performance of the lithium-ion battery.

### SUMMARY

In view of the problem in the background, this application aims to provide an electrochemical apparatus and an electronic apparatus.

To achieve the foregoing objective, this application provides an electrochemical apparatus including a negative electrode plate and an electrolyte, where the negative electrode plate includes a negative electrode active material, where the negative electrode active material includes a silicon-based material; and the electrolyte includes a first substance, a second substance, and a third substance; where the first substance is selected from a fluorobenzene compound or a fluoroether compound; the second substance is at least one of phosphate, phosphite, carbonate, carboxylate, ether, or sulfone; and the third substance is a lithium salt; and based on mass of the electrolyte, a mass ratio of the second substance to the third substance is Y, where 0.8 ≤ Y ≤ 4.

In some embodiments, the fluorobenzene compound is at least one of fluorobenzene, difluorobenzene, trifluorobenzene, tetrafluorobenzene, pentafluorobenzene, or hexafluorobenzene.

In some embodiments, a structural formula of the fluoroether compound is shown in formula 1: 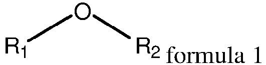 where R₁ and R₂ are each independently selected from a substituted or unsubstituted C₁₋₁₂ alkyl group or C₁₋₁₂ alkoxy group, where when substituted, a substituent is fluorine, and formula 1 has at least 4 fluorine atoms.

In some embodiments, the fluoroether compound is at least one of methyl nonafluorobutyl ether, 1, 1,2,2-tetrafluoroethyl-2,2,3,3-tetrafluoropropyl ether, 1,1,1,2,2-pentafluoro-3-(trifluoromethoxy)propane, 1,1,1,2,2,3,3-heptafluoro-3-methoxypropane, ethyl 1,1,2,3,3,3-hexafluoropropyl ether, 2,2,3,3-tetrafluoropropyl difluoromethyl ether, 1,1,2,2-tetrafluoroethyl ethyl ether, 1,1,1,2,3,3-hexafluoro-3-methoxypropane, 2,2,3,3,3-pentafluoropropyl-1,1,2,2-tetrafluoroethyl ester, methyl 2,2,3,3,3-pentafluoropropyl ether, 2,2,3,3-tetrafluoro-1-methoxypropane, 2,2,3,3,3-pentafluoropropyldifluoromethyl ether, 1,1,2,3,3,3-pentafluoropropyl-2,2,2-trifluoroethyl ether, 1H,1H,5H-octafluoropentyl-1,1,2,2-tetrafluoroethyl ether, 4-(difluoromethoxy)-1,1,1,2,3,3-hexafluorobutane, 2H-hexafluoropropyl 2,2,3,3-tetrafluoroether, or 1-(1,1,2,2-tetrafluoroethoxy)butane.

In some embodiments, a mass percentage of the first substance in the electrolyte is A%, where 15 ≤ A ≤80.

In some embodiments, the second substance is at least one of the following substances:
triethyl phosphite, trimethyl phosphite, triethyl phosphate, trimethyl phosphate, tripropyl phosphate, triphenyl phosphate, tris(trifluoroethyl)phosphate, tris(trimethylsilane)phosphate, trimethylsilylphosphite,
bis(2,2,2-trifluoroethyl) carbonate, dimethyl carbonate, ethyl methyl carbonate, diethyl carbonate, propylene carbonate, vinyl carbonate, dipropyl carbonate, methylpropyl carbonate, pentafluoropropylethylene carbonate, methyltrifluoroethyl carbonate, trifluoromethylethylene carbonate,
propyl propionate, ethyl propionate, ethyl acetate, ethyl formate, methyl acetate, propyl acetate, butyl butyrate, ethyl difluoroacetate, difluoroethyl acetate, ethyl trifluoroacetate, trifluoroethyl acetate, methyl propionate, methyl trifluoropropionate,
ethylene glycol diethyl ether, diglyme dimethyl ether, triglyme, 1,3 dioxane, 1,4 dioxane, ethylene glycol formate ethyl ether, diethoxymethane, 1,3 dimethoxypropane, 1,1,3,3-tetraethoxypropane, 18-crown ether-6, 12-crown ether-4, 15-crown ether-5, sulfolane, or dimethyl sulfone.

In some embodiments, the third substance is at least one of lithium bisfluorosulfonimide, lithium bistrifluorosulfonimide, lithium hexafluorophosphate, lithium tetrafluoroborate, lithium bisfluoroxaloborate, or lithium 4,5-dicyano-2-(trifluoromethyl)imidazole.

In some embodiments, the electrolyte further includes an additive, where the additive is at least one of fluoroethylene carbonate, vinylene carbonate, 1,3-propane sultone, 1,4-butane sultone, 2,4-butane sultone, succinonitrile, adiponitrile, fumaronitrile, glutaronitrile, 1,3,6-hexanetricarbonitrile, 1,2,3-tris(2-cyanoethoxy)propane, or hexynenitrile; and a mass percentage of the additive in the electrolyte is B%, where 0.5 ≤ B ≤ 30.

In some embodiments, based on a total weight of the negative electrode active material, a mass percentage of the silicon-based material is a%, where 10 ≤ a ≤ 90.

In some embodiments, a protection layer is provided on surface of particles of the silicon-based material. The protection layer is selected from a graphite carbon material and/or a functional oxide, where
a chemical formula of the functional oxide is MeₘOₙ, where Me includes at least one of Al, Si, Mn, V, Cr, Co, or Zr, m is 1 to 2, and n is 1 to 3.

In some embodiments, this application further provides an electronic apparatus, where the electronic apparatus includes the foregoing electrochemical apparatus.

This application includes at least the following beneficial effects:

In this application, a silicon-based material is applied to a negative electrode, and a specific electrolyte with a stronger reduction resistance is provided. When a negative electrode interface SEI film is broken, its reactivity on the negative electrode is weaker, and the SEI film can be quickly repaired, so that oxidation and decomposition of the electrolyte on the negative electrode are reduced, thereby improving cycling performance of the electrochemical apparatus.

### DETAILED DESCRIPTION

Example embodiments are fully described in detail below. However, these example embodiments may be implemented in different ways and should not be construed as being limited to the embodiments described in this application. On the contrary, these embodiments are provided for an object of making the disclosure of the present application thorough and complete, as well as to adequately communicate the scope of the present application to persons skilled in the art.

### (Electrochemical apparatus)

The electrochemical apparatus may be a capacitor, a lithium-ion battery, a sodium-ion battery, or a zinc-ion battery. For example, it may be a lithium-ion capacitor, a lithium-ion primary battery, or a lithium-ion secondary battery.

The electrochemical apparatus includes a positive electrode plate, a negative electrode plate, a separator, and an electrolyte.

### [Electrolyte]

In some embodiments, the electrolyte includes a first substance, a second substance, and a third substance. Addition of the first substance, the second substance, and the third substance into the electrolyte can significantly improve cycling performance of the electrochemical apparatus.

In some embodiments, the first substance is selected from a fluorobenzene compound or a fluoroether compound. With lithium salt kept in high concentration state, the fluorine ether or fluorobenzene solvents added can form an elastic organic SEI layer on the silicon negative electrode, and a joint film-forming effect effectively improves the cycling performance of the silicon anode battery.

In some embodiments, the second substance is at least one of phosphate, phosphite, carbonate, carboxylate, ether, or sulfone.

In some embodiments, the third substance is a lithium salt.

In some embodiments, based on mass of the electrolyte, a mass ratio of the second substance to the third substance is Y, where 0.8 ≤ Y ≤ 4. In the electrolyte, a mass ratio of the solvent to the lithium salt being controlled in 0.8 to 4 can ensure the high concentration state of the lithium salt. In this case, lithium ion coordination is inconsistent with a conventional electrolyte system. Because the lithium salt concentration is relatively high, anions of the lithium salt participate in internal coordination of the lithium ions, and when an ion cluster reaches a ruptured SEI surface layer, the anions rapidly participate in SEI film formation, and repair the SEI in a timely and high-quality manner.

In some embodiments, the fluorobenzene compound is at least one of fluorobenzene, difluorobenzene, trifluorobenzene, tetrafluorobenzene, pentafluorobenzene, or hexafluorobenzene.

In some embodiments, a structural formula of the fluoroether compound is shown in formula 1: 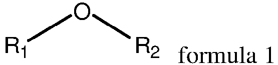 where R₁ and R₂ are each independently selected from a substituted or unsubstituted C₁₋₁₂ alkyl group or C₁₋₁₂ alkoxy group, where when substituted, a substituent is fluorine, and formula 1 has at least 4 fluorine atoms.

In some embodiments, the fluoroether compound is at least one of methyl nonafluorobutyl ether, 1, 1,2,2-tetrafluoroethyl-2,2,3,3-tetrafluoropropyl ether, 1,1,1,2,2-pentafluoro-3-(trifluoromethoxy)propane, 1,1,1,2,2,3,3-heptafluoro-3-methoxypropane, ethyl 1,1,2,3,3,3-hexafluoropropyl ether, 2,2,3,3-tetrafluoropropyl difluoromethyl ether, 1,1,2,2-tetrafluoroethyl ethyl ether, 1,1,1,2,3,3-hexafluoro-3-methoxypropane, 2,2,3,3,3-pentafluoropropyl-1,1,2,2-tetrafluoroethyl ester, methyl 2,2,3,3,3-pentafluoropropyl ether, 2,2,3,3-tetrafluoro-1-methoxypropane, 2,2,3,3,3-pentafluoropropyldifluoromethyl ether, 1,1,2,3,3,3-pentafluoropropyl-2,2,2-trifluoroethyl ether, 1H,1H,5H-octafluoropentyl-1,1,2,2-tetrafluoroethyl ether, 4-(difluoromethoxy)-1,1,1,2,3,3-hexafluorobutane, 2H-hexafluoropropyl 2,2,3,3-tetrafluoroether, or 1-(1,1,2,2-tetrafluoroethoxy)butane.

In some embodiments, a mass percentage of the first substance in the electrolyte is A%, where 15 ≤ A ≤80. When the mass percentage of the first substance is low, such as lower than 15%, content of the second substance or the third substance in the electrolyte is high. When the content of the second substance is high, a resulting electrolyte system exhibits a low lithium salt content, affecting dissociation and adsorption of lithium ions on the positive and negative electrodes, and affecting the cycling performance of the electrochemical apparatus. When the content of the third substance is high, viscosity of the electrolyte increases, affecting improvement of battery cycling performance. When the mass percentage of the first substance is excessively high, such as higher than 80%, the content of the second substance or the third substance in the electrolyte is excessively low, which is not conducive to migration of ions in the electrolyte, affecting the discharge capacity of the electrochemical apparatus.

In some embodiments, the second substance is at least one of the following substances:
triethyl phosphite, trimethyl phosphite, triethyl phosphate, trimethyl phosphate, tripropyl phosphate, triphenyl phosphate, tris(trifluoroethyl)phosphate, tris(trimethylsilane)phosphate, trimethylsilylphosphite,
bis(2,2,2-trifluoroethyl) carbonate, dimethyl carbonate, ethyl methyl carbonate, diethyl carbonate, propylene carbonate, vinyl carbonate, dipropyl carbonate, methylpropyl carbonate, pentafluoropropylethylene carbonate, methyltrifluoroethyl carbonate, trifluoromethylethylene carbonate,
propyl propionate, ethyl propionate, ethyl acetate, ethyl formate, methyl acetate, propyl acetate, butyl butyrate, ethyl difluoroacetate, difluoroethyl acetate, ethyl trifluoroacetate, trifluoroethyl acetate, methyl propionate, methyl trifluoropropionate,
ethylene glycol diethyl ether, diglyme dimethyl ether, triglyme, 1,3 dioxane, 1,4 dioxane, ethylene glycol formate ethyl ether, diethoxymethane, 1,3 dimethoxypropane, 1,1,3,3-tetraethoxypropane, 18-crown ether-6, 12-crown ether-4, 15-crown ether-5,
sulfolane, or dimethyl sulfone.

In some embodiments, the third substance is at least one of lithium bisfluorosulfonimide, lithium bistrifluorosulfonimide, lithium hexafluorophosphate, lithium tetrafluoroborate, lithium bisfluoroxaloborate, or lithium 4,5-dicyano-2-(trifluoromethyl)imidazole.

In some embodiments, the electrolyte further includes an additive, where the additive is at least one of fluoroethylene carbonate, vinylene carbonate, 1,3-propane sultone, 1,4-butane sultone, 2,4-butane sultone, succinonitrile, adiponitrile, fumaronitrile, glutaronitrile, 1,3,6-hexanetricarbonitrile, 1,2,3-tris(2-cyanoethoxy)propane, or hexynenitrile.

In some embodiments, a mass percentage of the additive in the electrolyte is B%, where 0.5 ≤ B ≤ 30. When the content of the additive is excessively low, such as lower than 0.5%, an effective and continuously protective interface layer cannot be formed at the interface, not conducive to long-term cycling of the battery. When the content of the additive is excessively high, viscosity of the electrolyte increases, affecting conductivity of the electrolyte, and the interface impedance increases, affecting the cycling performance of the electrochemical apparatus.

### [Negative electrode plate]

The negative electrode plate includes a negative electrode current collector and a negative electrode film.

In some embodiments, the negative electrode current collector is a metal, including but not limited to, for example, copper foil, nickel foil, stainless steel foil, titanium foil, nickel foam, copper foam, a polymer base coated with conductive metal, or a combination thereof.

The negative electrode film is disposed on a surface of the negative electrode current collector. The negative electrode film includes a negative electrode active substance.

In some embodiments, the negative electrode active material includes a silicon-based material.

In some embodiments, based on a total weight of the negative electrode active material, a mass percentage of the silicon-based material is a%, where 10 ≤ a ≤ 90. Addition of the silicon-based material can significantly improve the volume energy density of the electrochemical apparatus. However, when content of the silicon-based material is excessively high, such as higher than 90%, the negative electrode significantly swells and deforms, causing electronic contact failure and affecting the cycling performance of the electrochemical apparatus. When the content of the silicon-based material is excessively low, such as lower than 10%, improvement of the volume energy density of the electrochemical apparatus is not significant, having little effect on improving the cycling performance of the electrochemical apparatus.

In some embodiments, a protection layer is provided on a surface of particles of the silicon-based material. The protection layer is selected from a graphite carbon material and/or a functional oxide. Provision of the protection layer on the surface of the silicon-based material can suppress the swelling of the silicon-based material, further improving the cycling stability of the battery.

In some embodiments, a chemical formula of the functional oxide is MeₘOₙ, where Me includes at least one of Al, Si, Mn, V, Cr, Co, or Zr, m is 1 to 2, and n is 1 to 3.

In some embodiments, the negative electrode film further includes a negative electrode binder. In some embodiments, the negative electrode binder includes at least one of vinylidene fluoride-hexafluoropropylene copolymer (PVDF-co-HFP), polyvinylidene fluoride, polyacrylonitrile, polymethylmethacrylate, polyvinyl alcohol, carboxymethyl cellulose, hydroxypropyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyethylene, polypropylene, styrene-butadiene rubber, acrylic (ester) styrene-butadiene rubber, epoxy resin, or nylon.

In some embodiments, the preparation method for negative electrode plate is known in the art as a preparation method for negative electrode plate that can be used in an electrochemical apparatus. In some embodiments, the negative electrode active substance, the negative electrode binder, and the conductive material and thickener that can be selected as required are dissolved or dispersed in a solvent to obtain a negative electrode slurry. The negative electrode slurry is applied to the negative electrode current collector, followed by drying, rolling, and slitting, to obtain a negative electrode plate. It should be noted that in the obtained negative electrode plate, a portion containing the negative electrode active substance on the surface of the negative electrode current collector is the negative electrode film.

### [Positive electrode plate]

The positive electrode plate includes a positive electrode current collector and a positive electrode film.

The positive electrode current collector is made of metal, for example, but not limited to, copper foil.

The positive electrode film is disposed on one surface of the positive electrode current collector. The positive electrode film includes a positive electrode active substance. When the electrochemical apparatus is a lithium-ion battery, the positive electrode active material can be selected from lithium cobalt oxide, lithium nickel oxide, lithium manganese oxide, lithium nickel manganese oxide, lithium nickel cobalt manganese oxide, lithium nickel cobalt aluminum oxide, olivine structure lithium-containing phosphate, and the like, such as lithium cobalt oxide or lithium manganate. However, this application is not limited to these materials, and other conventional commonly known materials that can be used as the positive electrode active material for lithium-ion batteries may also be used.

In some embodiments, the preparation method for negative electrode plate is known in the art as a preparation method for negative electrode plate that can be used in an electrochemical apparatus. In some embodiments, during preparation of the positive electrode slurry, the positive electrode active substance, the positive electrode binder, and the conductive material that can be selected as required are dissolved or dispersed in a solvent to obtain a positive electrode slurry. The positive electrode slurry is applied to the positive electrode current collector, followed by drying, rolling, and slitting, to obtain a positive electrode plate. It should be noted that in the obtained positive electrode plate, a portion containing the positive electrode active substance on the surface of the positive electrode current collector is the positive electrode film.

### [Separator]

In some embodiments, the separator is polyethylene, polypropylene, polyvinylidene fluoride, or a multilayer composite film thereof.

In some embodiments, the separator is a single-layer separator or a multilayer separator.

In some embodiments, the separator is coated with a coating. In some embodiments, the coating includes at least one of an organic coating or an inorganic coating. The organic coating is at least one of polyvinylidene fluoride, vinylidene fluoride-hexafluoropropylene copolymer, polyacrylonitrile, polyimide, acrylonitrile-butadiene copolymer, acrylonitrile-styrene-butadiene copolymer, polymethyl methacrylate, polymethyl acrylate, polyethyl acrylate, acrylic-styrene copolymer, polydimethylsiloxane, sodium polyacrylate, or sodium carboxymethylcellulose. The inorganic coating is at least one of SiO₂, Al₂O₃, CaO, TiO₂, ZnO₂, MgO, ZrO₂, or SnO₂.

There are no particular restrictions on the form and thickness of the separator in this application. A preparation method for negative electrode plate is known in the art as a preparation method for negative electrode plate that can be used in an electrochemical apparatus.

### [Housing]

In some embodiments, the positive electrode plate, the separator, and the negative electrode plate are stacked in sequence, so that the separator is sandwiched between the positive electrode plate and the negative electrode plate. A resulting stack is wound to obtain a wound battery cell (or referred to as electrode assembly). The battery cell is disposed in the housing, and the electrolyte is injected, followed by vacuum packaging, standing, formation, shaping, and aging, to obtain the electrochemical apparatus.

In some other embodiments, the battery cell is a stacked cell.

In some other embodiments, the electrochemical apparatus is used in cooperation with a circuit protection board.

The housing is a hard housing or a flexible housing. The hard housing is made of a material such as metal. The flexible housing is, for example, a metallic film, such as aluminum film or steel film.

### (Electronic apparatus)

This application further provides an electronic apparatus containing the foregoing electrochemical apparatus. The electronic apparatus of this application may be any electronic apparatus, for example, but is not limited to, notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, and lithium-ion capacitors. It should be noted that the electrochemical apparatus of this application is not only applicable to the electronic apparatuses listed above but also applicable to energy storage power stations, marine vehicles, and air vehicles. The air vehicles include airborne vehicles inside the atmosphere and airborne vehicles outside the atmosphere.

### [Test]

The following lists some specific examples and comparative examples for better illustrating this application. In the following the examples, all reagents, materials, and instruments used are commercially available unless otherwise specified.

Lithium-ion batteries in examples 1-1 to 1-37, examples 2-1 to 2-12, examples 3-1 to 3-2, and comparative examples 1-1 to 1-6 are all prepared according to the following method:

### (1) Preparation of positive electrode plate

Positive electrode material lithium cobalt (LiCoO₂), polyvinylidene fluoride (PVDF), and Super-P were dissolved in N-methylpyrrolidone (NMP) in a mass ratio of 96:2:2 and mixed to uniformity, to obtain a positive electrode slurry. The positive electrode slurry was applied evenly to the positive electrode collector aluminum foil with a thickness of 12 µm, followed by baking at 120°C for 1 h, pressing, and slitting, to obtain the positive electrode plate.

### (2) Preparation of negative electrode plate

A negative electrode active material with or without a protection layer on a surface, carboxymethyl cellulose sodium (CMC), and styrene-butadiene rubber were dissolved in water in a mass ratio of 85:2:13. The mixture was stirred fully to obtain a negative electrode slurry. The negative electrode slurry was evenly applied on a negative collector copper foil having a thickness of 12 µm, and baked at 120°C for 1 h to obtain a negative electrode film. After pressing and slitting, a negative electrode plate was obtained, where the negative electrode active material was a mixed material of silicon-based active material (SiO) and graphite.

### (3) Preparation of a separator

A single-layer PE porous polymer film was used as the separator, where a thickness was 5 microns, a porosity was 40%, the inorganic coating was Al₂O₃, and organic particles were polyvinylidene fluoride.

### (4) Preparation of electrolyte

The first substance, the second substance, and the third substance were mixed in a specified ratio to prepare the electrolyte. For example, in example 1, a mass percentage of 1H,1H,5H-octafluoropentyl-1,1,2,2-tetrafluoroethyl ether is 40%, and a mass percentage of ethylene glycol diethyl ether and lithium bisfluorosulfonimide in the electrolyte is 60%. Alternatively, another additive of different content was added into the foregoing electrolyte. For example, in example 2-2, on the basis of the electrolyte in example 1-7, 5% fluoroethylene carbonate was added to the electrolyte.

### (5) Preparation of lithium-ion battery

A polypropylene film with a thickness of 12 µm was used as a separator. The positive electrode plate, the separator, and the negative electrode plate were stacked in order, so that the separator was placed between the positive and negative electrodes for separation, and the stack was wound to obtain a cylinder bare cell. The bare cell was packaged in an aluminum foil bag, and baked at 80 °C to remove water, to obtain a dry battery cell. A corresponding electrolyte was injected, followed by processes such as vacuum packaging, standing, formation, and shaping, to obtain the lithium-ion battery.

Lithium-ion batteries in examples 1-1 to 1-37, examples 2-1 to 2-12, examples 3-1 to 3-2, and comparative examples 1-1 to 1-6 were prepared according to the foregoing method, and battery performance was tested. In examples 1-1 to 1-37, examples 2-1 to 2-12, examples 3-1 and 3-2, and comparative examples 1-1 to 1-6, types and contents of substances or additives used, the surface protection layer parameters of a silicon-based material, and performance test results of the lithium-ion batteries are shown in Table 1 to Table 3. The content of each additive is a weight percentage obtained through calculation based on mass of the electrolyte.

The following shows the performance tests of the lithium-ion batteries.

### (1) High-temperature cycling performance test

At 45°C, the battery was charged to 4.45 V at a constant current of 0.5C, left standing for 30 min, and discharged to 3.0 V at 0.5C. Such charge and discharge cycle was repeated for 300 times.

Cycling capacity retention rate (%) = discharge capacity of the 300th cycle/discharge capacity of the first cycle × 100%.

### (2) Room temperature cycling performance test

At 25°C, the battery was charged to 4.45 V at a constant current of 0.5C, left standing for 30 min, and discharged to 3.0 V at 0.5C. Such charge and discharge cycle was repeated for 300 times.

Cycling capacity retention rate (%) = discharge capacity of the 300th cycle/discharge capacity of the first cycle × 100%.

The battery performance test data are as follows:
In Table 1, the negative electrode material is a mixture of silicon-based material and graphite, where a proportion of the silicon substrate material in the negative electrode active material is 65%, and there is no protection layer on the surface of the silicon-based material. In comparative example 1-1, the conventional carbonate electrolyte is used as a control, and a formula is as follows: vinyl carbonate and diethyl carbonate were mixed well at a ratio of 3:7 to obtain a basic solvent, and LiPF₆ was dissolved in the foregoing basic solvent to obtain an electrolyte. Based on the mass of the electrolyte, a mass percentage of LiPF₆ is 12.5wt%

**Table 1 Parameters for examples 1-1 to 1-37 and comparative examples 1-1 to 1-6**

| Example | First substance | Second substance | Third substance | Content of first substance (%) | Y | Cycling capacity retention rate at 45°C (%) | Cycling capacity retention rate at 25°C (%) |
|---|---|---|---|---|---|---|---|
| Example 1-1 | 1H,1H,5H-octafluoropentyl-1,1,2,2-tetrafluoroethyl ether | Ethylene glycol diethyl ether | Lithium bisfluorosulfonimide | 40 | 0.8 | 40 | 45 |
| Example 1-2 | 1H,1H,5H-octafluoropentyl-1,1,2,2-tetrafluoroethyl ether | Ethylene glycol diethyl ether | Lithium bisfluorosulfonimide | 40 | 2 | 55 | 60 |
| Example 1-3 | 1H,1H,5H-octafluoropentyl-1,1,2,2-tetrafluoroethyl ether | Ethylene glycol diethyl ether | Lithium bisfluorosulfonimide | 40 | 2.5 | 69 | 65 |
| Example 1-4 | 1H,1H,5H-octafluoropentyl-1,1,2,2-tetrafluoroethyl ether | Ethylene glycol diethyl ether | Lithium bisfluorosulfonimide | 40 | 3 | 68 | 68 |
| Example 1-5 | 1H,1H,5H-octafluoropentyl-1,1,2,2-tetrafluoroethyl ether | Ethylene glycol diethyl ether | Lithium bisfluorosulfonimide | 40 | 3.5 | 58 | 64 |
| Example 1-6 | 1H,1H,5H-octafluoropentyl-1,1,2,2-tetrafluoroethyl ether | Ethylene glycol diethyl ether | Lithium bisfluorosulfonimide | 40 | 4 | 42 | 47 |
| Example 1-7 | 1,1,2,2-tetrafluoroethyl-2,2,3,3-tetrafluoropropyl ether | Ethylene glycol diethyl ether | Lithium bisfluorosulfonimide | 15 | 2 | 50 | 52 |
| Example 1-8 | 1,1,2,2-tetrafluoroethyl-2,2,3,3-tetrafluoropropyl ether | Ethylene glycol diethyl ether | Lithium bisfluorosulfonimide | 30 | 2 | 63 | 63 |
| Example 1-9 | 1,1,2,2-tetrafluoroethyl-2,2,3,3-tetrafluoropropyl ether | Ethylene glycol diethyl ether | Lithium bisfluorosulfonimide | 45 | 2 | 68 | 70 |
| Example 1-10 | 1,1,2,2-tetrafluoroethyl-2,2,3,3-tetrafluoropropyl ether | Ethylene glycol diethyl ether | Lithium bisfluorosulfonimide | 60 | 2 | 61 | 65 |
| Example 1-11 | 1,1,2,2-tetrafluoroethyl-2,2,3,3-tetrafluoropropyl ether | Ethylene glycol diethyl ether | Lithium bisfluorosulfonimide | 80 | 2 | 45 | 52 |
| Example 1-12 | 1,1,2,2-tetrafluoroethyl ethyl ether | 1,3 dioxane | Lithium bisfluorosulfonimide | 40 | 2.2 | 55 | 57 |
| Example 1-13 | 2H-hexafluoropropyl 2,2,3,3-tetrafluoroether | Trimethylsilylphosphite | Lithium bisfluorosulfonimide | 50 | 2.2 | 56 | 58 |
| Example 1-14 | 2,2,3,3-tetrafluoro-1-methoxypropane | 18-crown ether-6 | Lithium bisfluorosulfonimide | 55 | 2.2 | 60 | 61 |
| Example 1-15 | 4-(difluoromethoxy)-1,1,1,2,3,3-hexafluorobutane | Tripropyl phosphate | Lithium bisfluorosulfonimide | 55 | 2.2 | 57 | 59 |
| Example 1-16 | Fluorobenzene | Triphenyl phosphate | Lithium bisfluorosulfonimide | 55 | 2.2 | 59 | 64 |
| Example 1-17 | Trifluorobenzene | Ethyl propionate | Lithium bisfluorosulfonimide | 60 | 2.2 | 60 | 63 |
| Example 1-18 | Hexafluorobenzene | Ethyl acetate | Lithium tetrafluoroborate | 50 | 2.2 | 57 | 60 |
| Example 1-19 | 1,1,2,2-tetrafluoroethyl-2,2,3,3-tetrafluoropropyl ether | Diglyme dimethyl ether | Lithium bisfluorosulfonimide | 45 | 2 | 65 | 71 |
| Example 1-20 | 1,1,2,2-tetrafluoroethyl-2,2,3,3-tetrafluoropropyl ether | Triethyl phosphate | Lithium bisfluorosulfonimide | 45 | 2 | 60 | 65 |
| Example 1-21 | 1,1,2,2-tetrafluoroethyl-2,2,3,3-tetrafluoropropyl ether | Diethyl carbonate | Lithium bisfluorosulfonimide | 45 | 2 | 62 | 67 |
| Example 1-22 | 1,1,2,2-tetrafluoroethyl-2,2,3,3-tetrafluoropropyl ether | Propyl propionate | Lithium bisfluorosulfonimide | 45 | 2 | 58 | 69 |
| Example 1-23 | 1,1,2,2-tetrafluoroethyl-2,2,3,3-tetrafluoropropyl ether | Sulfolane | Lithium bisfluorosulfonimide | 45 | 2 | 65 | 71 |
| Example 1-24 | 1,1,2,2-tetrafluoroethyl-2,2,3,3-tetrafluoropropyl ether | Diethyl carbonate | Lithium tetrafluoroborate | 45 | 2 | 68 | 68 |
| Example 1-25 | 1,1,2,2-tetrafluoroethyl-2,2,3,3-tetrafluoropropyl ether | Diethyl carbonate | Lithium bistrifluorosulfonimide | 45 | 2 | 70 | 71 |
| Example 1-26 | 1,1,2,2-tetrafluoroethyl-2,2,3,3-tetrafluoropropyl ether/1,1,2,2-tetrafluoroethyl ethyl ether | Diethyl carbonate | Lithium bisfluorosulfonimide | 20+25 | 2 | 65 | 66 |
| Example 1-27 | 1,1,2,2-tetrafluoroethyl-2,2,3,3-tetrafluoropropyl ether/1,1,2,2-tetrafluoroethyl ethyl ether | Diethyl carbonate + dimethyl carbonate | Lithium bisfluorosulfonimide | 10+35 | 1.6 | 59 | 62 |
| Example 1-28 | 1,1,2,2-tetrafluoroethyl-2,2,3,3-tetrafluoropropyl ether/1,1,2,2-tetrafluoroethyl ethyl ether | Diethyl carbonate + dimethyl carbonate | Lithium bisfluorosulfonimide + lithium bistrifluorosulfonimide | 5+40 | 1.6 | 58 | 65 |
| Example 1-29 | 1,1,2,2-tetrafluoroethyl-2,2,3,3-tetrafluoropropyl ether | Propylene carbonate | Lithium hexafluorophosphate | 50 | 3 | 57 | 63 |
| Example 1-30 | 1,1,2,2-tetrafluoroethyl-2,2,3,3-tetrafluoropropyl ether | Sulfolane | Lithium hexafluorophosphate | 50 | 3 | 60 | 61 |
| Example 1-31 | 1,1,2,2-tetrafluoroethyl-2,2,3,3-tetrafluoropropyl ether | Ethylene glycol diethyl ether | Lithium hexafluorophosphate | 40 | 3 | 55 | 69 |
| Example 1-32 | 1,1,2,2-tetrafluoroethyl-2,2,3,3-tetrafluoropropyl ether | Difluoroethyl acetate | Lithium hexafluorophosphate | 30 | 3 | 56 | 62 |
| Example 1-33 | 1,1,2,2-tetrafluoroethyl ethyl ether | Ethyl trifluoroacetate | Lithium hexafluorophosphate | 60 | 3 | 59 | 70 |
| Example 1-34 | 1,1,2,2-tetrafluoroethyl ethyl ether | Ethyl methyl carbonate | Lithium hexafluorophosphate | 60 | 3 | 56 | 63 |
| Example 1-35 | 1,1,2,2-tetrafluoroethyl ethyl ether | Propyl propionate | Lithium hexafluorophosphate | 65 | 3 | 58 | 65 |
| Example 1-36 | 1,1,2,2-tetrafluoroethyl-2,2,3,3-tetrafluoropropyl ether | Trimethyl phosphate | Lithium hexafluorophosphate | 65 | 3 | 61 | 67 |
| Example 1-37 | 1,1,2,2-tetrafluoroethyl-2,2,3,3-tetrafluoropropyl ether | Triethyl phosphate | Lithium hexafluorophosphate | 65 | 3 | 59 | 63 |
| Comparative Example 1-1 | / | Vinyl carbonate + diethyl carbonate | Lithium hexafluorophosphate | / | 7 | 25 | 40 |
| Comparative Example 1-2 | 1H,1H,5H-octafluoropentyl-1,1,2,2-tetrafluoroethyl ether | Ethylene glycol diethyl ether | Lithium bisfluorosulfonimide | 40 | 0.6 | / | / |
| Comparative Example 1-3 | 1H,1H,5H-octafluoropentyl-1,1,2,2-tetrafluoroethyl ether | Ethylene glycol diethyl ether | Lithium bisfluorosulfonimide | 40 | 4.5 | 38 | 42 |
| Comparative Example 1-4 | / | Ethylene glycol diethyl ether | Lithium bisfluorosulfonimide | / | 2 | 32 | 36 |
| Comparative Example 1-5 | 1H,1H,5H-octafluoropentyl-1,1,2,2-tetrafluoroethyl ether | / | Lithium bisfluorosulfonimide | 40 | / | Lithium salt cannot dissolve | / |
| Comparative Example 1-6 | 1H,1H,5H-octafluoropentyl-1,1,2,2-tetrafluoroethyl ether | Ethylene glycol diethyl ether | / | 40 | / | No lithium salt, unable to be used as electrolyt e | / |

In Table 1, an electrolyte of conventional solvent and lithium salt is used in comparative example 1-1, and the cycling performance decreases rapidly. In examples 1-1 to 1-6, the content of the first substance is controlled at 40%, and the weight ratio of the second substance to the third substance is adjusted to be between 1.7 and 4. The cycling performance is significantly improved compared with comparative example 1-1, comparative example 1-2, and comparative example 1-3. The value of Y is preferably 0.8 to 4. When the ratio Y is excessively small, the third substance cannot be fully dissolved in the second substance, and the electrolyte has obvious turbidity or precipitation, as shown in the comparative example 1-2. As a result, electrical performance test cannot be performed. In contrast, when Y is excessively large, as shown in comparative example 1-3, because the content of the third substance is excessively low, an ideal solvent coordination cannot be achieved between the second substance and the third substance, affecting the cycling performance of the electrochemical apparatus.

In examples 1-7 to 1-11, when the content of the first substance in the electrolyte is between 15% and 80%, performance of the electrochemical apparatus is improved to different extents. When the content of the first substance in the electrolyte is excessively low, it cannot effectively participate in a film-forming reaction on the electrode interface, affecting the cycling performance of the electrochemical apparatus. When the content of the first substance is excessively high, kinetic performance of the electrolyte is affected, and performance of the electrochemical apparatus is not significantly improved.

As can be learned from examples 1-1 to 1-37 and comparative examples 1-1 to 1-6, with the first substance, the second substance, and the third substance added to an electrolyte, and types and contents of the first substance, the second substance, and the third substance adjusted, the electrochemical apparatus can have significantly improved cycling performance.

In Table 2, the negative electrode material is a mixture of silicon-based material and graphite, where a proportion of the silicon substrate material in the negative electrode active material is 65%, and there is no protection layer on the surface of the silicon-based material.

In examples 2-1 to 2-12, the preparation processes and parameters are the same as those in example 17 except for addition of additives to the electrolyte. Types and contents of the added additives are shown in Table 2.

**Table 2 Parameters for example 1-7 and examples 2-1 to 2-12**

| Example | Additive | B | Cycling capacity retention rate at 45°C (%) | Cycling capacity retention rate at 25°C (%) |
|---|---|---|---|---|
| Example 1-7 | / | / | 50 | 52 |
| Example 2-1 | Fluoroethylene carbonate | 1 | 55 | 60 |
| Example 2-2 | Fluoroethylene carbonate | 5 | 66 | 62 |
| Example 2-3 | Fluoroethylene carbonate | 10 | 70 | 78 |
| Example 2-4 | Fluoroethylene carbonate | 30 | 56 | 68 |
| Example 2-5 | Fluoroethylene carbonate | 32 | 54 | 55 |
| Example 2-6 | Vinylene carbonate | 0.5 | 59 | 68 |
| Example 2-7 | 1,3-propane sultone | 0.5 | 71 | 76 |
| Example 2-8 | Adiponitrile | 1 | 72 | 79 |
| Example 2-9 | 1,3,6-hexanetricarbonitrile | 1 | 72 | 76 |
| Example 2-10 | Hexynenitrile | 1 | 64 | 65 |
| Example 2-11 | Fluoroethylene carbonate + vinylene·carbonate | 2 + 0.5 | 65 | 71 |
| Example 2-12 | Fluoroethylene carbonate + 1,3,6-hexanetricarbonitrile + adiponitrile | 5 + 1 + 1 | 75 | 80 |

As can be learned from example 1-7 and examples 2-1 to 2-12 in Table 2, addition of a film-forming additive such as fluoroethylene carbonate, vinylene·carbonate, 1,3-propane sultone, adiponitrile, 1,3,6-hexanetricarbonitrile, or hexynenitrile into the electrolyte facilitates forming and repair of the CEI and SEI films, further improving cycling performance of the electrochemical apparatus. Each additive may be added separately or used in combination.

In examples 3-1 and 3-2, except that a protection layer is disposed on the surface of the silicon-based material, other preparation processes and parameters are the same as those in example 2-11. The types of the protection layers are shown in Table 3.

**Table 3 Parameters for examples 2-11, 3-1, and 3-2**

| Example | Surface protection layer of silicon-based material | Cycling capacity retention rate at 45°C (%) | Cycling capacity retention rate at 25°C (%) |
|---|---|---|---|
| Example 2-11 | / | 65 | 71 |
| Example 3-1 | Graphite carbon layer | 75 | 85 |
| Example 3-2 | Al₂O₃ | 70 | 73 |

According to Table 3, in example 2-11, a silicon-based material without surface treatment is used. In examples 3-1 and 3-2, a carbon coating layer and an oxide protection layer are respectively disposed on the surfaces of the silicon-based material. It can be learned that provision of a protection layer on the surface of the silicon-based material can suppress swelling of the silicon-based material, further improving the cycling stability of the battery.

The foregoing disclosed features are not intended to limit the implementation scope of this disclosure. Therefore, equivalent changes made to the content as claimed in this disclosure shall be included within the scope of the claims of this disclosure.

## Claims

1. An electrochemical apparatus, comprising a negative electrode plate and an electrolyte, wherein
the negative electrode plate comprises a negative electrode active material, wherein the negative electrode active material comprises a silicon-based material; and
the electrolyte comprises a first substance, a second substance and a third substance; wherein
the first substance is selected from a fluorobenzene compound or a fluoroether compound;
the second substance is at least one of phosphate, phosphite, carbonate, carboxylate, ether, or sulfone;
the third substance is a lithium salt; and
based on a mass of the electrolyte, a mass ratio of the second substance to the third substance is Y, wherein 0.8 ≤ Y ≤ 4.

2. The electrochemical apparatus according to claim 1, wherein
the fluorobenzene compound is at least one of fluorobenzene, difluorobenzene, trifluorobenzene, tetrafluorobenzene, pentafluorobenzene, or hexafluorobenzene.

3. The electrochemical apparatus according to claim 1, wherein
a structural formula of the fluoroether compound is shown in formula 1: 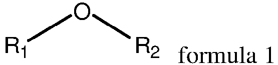
wherein R₁ and R₂ are each independently selected from a substituted or unsubstituted C₁₋₁₂ alkyl group or C₁₋₁₂ alkoxy group, wherein when substituted, a substituent is fluorine, and formula 1 has at least 4 fluorine atoms.

4. The electrochemical apparatus according to claim 3, wherein
the fluoroether compound is at least one of methyl nonafluorobutyl ether, 1,1,2,2-tetrafluoroethyl-2,2,3,3-tetrafluoropropyl ether, 1,1,1,2,2-pentafluoro-3-(trifluoromethoxy)propane, 1,1,1,2,2,3,3-heptafluoro-3-methoxypropane, ethyl 1,1,2,3,3,3-hexafluoropropyl ether, 2,2,3,3-tetrafluoropropyl difluoromethyl ether, 1,1,2,2-tetrafluoroethyl ethyl ether, 1,1,1,2,3,3-hexafluoro-3-methoxypropane, 2,2,3,3,3-pentafluoropropyl-1,1,2,2-tetrafluoroethyl ester, methyl 2,2,3,3,3-pentafluoropropyl ether, 2,2,3,3-tetrafluoro-1-methoxypropane, 2,2,3,3,3-pentafluoropropyldifluoromethyl ether, 1,1,2,3,3,3-pentafluoropropyl-2,2,2-trifluoroethyl ether, 1H,1H,5H-octafluoropentyl-1,1,2,2-tetrafluoroethyl ether, 4-(difluoromethoxy)-1,1,1,2,3,3-hexafluorobutane, 2H-hexafluoropropyl 2,2,3,3-tetrafluoroether, or 1-(1,1,2,2-tetrafluoroethoxy)butane.

5. The electrochemical apparatus according to claim 1, wherein
a mass percentage of the first substance in the electrolyte is A%, wherein 15 ≤ A ≤ 80.

6. The electrochemical apparatus according to claim 1, wherein
the second substance is at least one of the following substances:
triethyl phosphite, trimethyl phosphite, triethyl phosphate, trimethyl phosphate, tripropyl phosphate, triphenyl phosphate, tris(trifluoroethyl)phosphate, tris(trimethylsilane)phosphate, trimethylsilylphosphite,
bis(2,2,2-trifluoroethyl) carbonate, dimethyl carbonate, ethyl methyl carbonate, diethyl carbonate, propylene carbonate, vinyl carbonate, dipropyl carbonate, methylpropyl carbonate, pentafluoropropylethylene carbonate, methyltrifluoroethyl carbonate, trifluoromethylethylene carbonate,
propyl propionate, ethyl propionate, ethyl acetate, ethyl formate, methyl acetate, propyl acetate, butyl butyrate, ethyl difluoroacetate, difluoroethyl acetate, ethyl trifluoroacetate, trifluoroethyl acetate, methyl propionate, methyl trifluoropropionate,
ethylene glycol diethyl ether, diglyme dimethyl ether, triglyme, 1,3 dioxane, 1,4 dioxane, ethylene glycol formate ethyl ether, diethoxymethane, 1,3 dimethoxypropane, 1,1,3,3-tetraethoxypropane, 18-crown ether-6, 12-crown ether-4, 15-crown ether-5,
sulfolane, or dimethyl sulfone.

7. The electrochemical apparatus according to claim 1, wherein
the third substance is at least one of lithium bisfluorosulfonimide, lithium bistrifluorosulfonimide, lithium hexafluorophosphate, lithium tetrafluoroborate, lithium bisfluoroxaloborate, or lithium 4,5-dicyano-2-(trifluoromethyl)imidazole.

8. The electrochemical apparatus according to claim 1, wherein
the electrolyte further comprises an additive; wherein
the additive is at least one of fluoroethylene carbonate, vinylene carbonate, 1,3-propane sultone, 1,4-butane sultone, 2,4-butane sultone, succinonitrile, adiponitrile, fumaronitrile, glutaronitrile, 1,3,6-hexanetricarbonitrile, 1,2,3-tris(2-cyanoethoxy)propane, or hexynenitrile, and
a mass percentage of the additive in the electrolyte is B%, wherein 0.5 ≤ B ≤ 30.

9. The electrochemical apparatus according to claim 1, wherein
based on a total weight of the negative electrode active material, a mass percentage of the silicon-based material is a%, wherein 10 ≤ a ≤ 90.

10. The electrochemical apparatus according to claim 1, wherein
a protection layer is provided on a surface of particles of the silicon-based material, wherein the protection layer comprises a graphite carbon material and/or a functional oxide, wherein
a chemical formula of the functional oxide is MeₘOₙ, wherein Me comprises at least one of Al, Si, Mn, V, Cr, Co, or Zr, m is 1 to 2, and n is 1 to 3.

11. An electronic apparatus, comprising the electrochemical apparatus according to any one of claims 1 to 10.
